(19) Europäisches Patentamt
European Patent Office
Office européen des brevets

(11) **EP 1 875 407 B1**

(12) **EUROPEAN PATENT SPECIFICATION**

(45) Date of publication and mention
of the grant of the patent:
**11.07.2012  Bulletin 2012/28**

(51) Int Cl.:
***G06K 7/00*** (2006.01)

(86) International application number:
**PCT/IB2006/051030**

(21) Application number: **06727829.1**

(22) Date of filing: **04.04.2006**

(87) International publication number:
**WO 2006/109211 (19.10.2006 Gazette 2006/42)**

(54) **SYSTEM FOR SENSING A PHYSICAL PROPERTY IN A PLURALITY OF SCANNING POSITIONS**

SYSTEM ZUR MESSUNG EINER PHYSIKALISCHEN EIGENSCHAFT BEI MEHREREN ABTASTPOSITIONEN

SYSTEME DE DETECTION D'UNE PROPRIETE PHYSIQUE DANS UNE PLURALITE DE POSITIONS DE BALAYAGE

(84) Designated Contracting States:
**AT BE BG CH CY CZ DE DK EE ES FI FR GB GR HU IE IS IT LI LT LU LV MC NL PL PT RO SE SI SK TR**

(30) Priority: **14.04.2005  EP 05102965**

(43) Date of publication of application:
**09.01.2008  Bulletin 2008/02**

(73) Proprietor: **NXP B.V.
5656 AG Eindhoven (NL)**

(72) Inventors:
• **FONTIJN, Wilhelmus
A-1101 Vienna (AT)**
• **DIJKSTRA, Eelco
A-1101 Vienna (AT)**

(74) Representative: **Schouten, Marcus Maria et al
NXP B.V.
IP & Licensing Department
High Tech Campus 60
5656 AG Eindhoven (NL)**

(56) References cited:
**US-A- 6 040 774          US-A1- 2001 035 815
US-A1- 2002 139 942**

**Description**

FIELD OF THE INVENTION

The invention relates to a system for sensing a physical property allocated to scanning positions, comprising sensors adapted to sense the physical property within sensing regions that are arranged such that each of said regions sweeps at least one scanning position, the sensing regions being superposed on one another at least in one scanning position, so that each scanning position is swept by a unique pattern of sensing regions.

BACKGROUND OF THE INVENTION

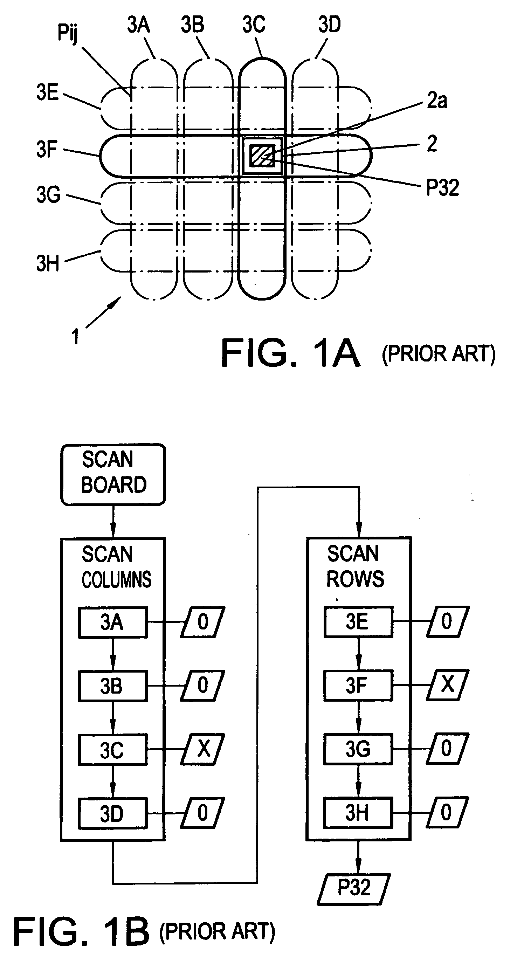

Sensing systems that comprise sensors with sensing regions are commonly known, wherein the sensing regions of these sensors are arranged in a row-column configuration. For instance, objects with built-in RFID tags can be cheaply localized in specific positions on a shelf or at specific terminals of a robotic delivery system, which shelves or terminals are swept by an arrangement of antennas configured in rows and columns. Each specific position is defined by the intersection of one row antenna with one column antenna. This known principle is illustrated in Fig. 1 A showing a game board 1 with sixteen scanning positions Pij arranged in a 4 x 4 matrix. A token 2 with a built-in RFID tag 2a is placed in one of these scanning positions Pij. The scanning positions Pij of the game board 1 are scanned by four antennas 3A - 3D arranged adjacent to each other in a column configuration and by four antennas 3E - 3H arranged adjacent to each other in a row configuration. The scanning process for the game board 1 is illustrated in the flowchart of Fig. 1B. First, all columns i are scanned by successively activated antennas 3A to 3D, querying whether one or more of the antennas 3A to 3D, corresponding to the first to fourth column, receives a signal from the RFID tag 2a. In this example only antenna 3C, which scans the third column, receives a signal from RFID tag 2a. Next, all rows j are scanned by successively activated antennas 3E to 3H, corresponding to the first to fourth row, querying whether one or more of these antennas 3E to 3H receives a signal from the RFID tag 2a. In this example only antenna 3F, which scans the second row, receives a signal from RFID tag 2a. The scanning position where the token 2 is present has thus been determined as being the scanning position P32. As will be recognized, eight scanning steps were necessary to achieve this result.

It is possible to use multiple antennas connected to multiple detectors to assess the location of an object with an embedded RFID tag on a surface. With a multitude of detectors, however, the cost is prohibitive.

Further to this US 6,040,774 discloses a location system and method employing a plurality of radio frequency readers arrayed with respect to a region having a plurality of zones within which a plurality of radio frequency tags are located. A data processor receives the identification of the tags within the coverage area of each reader and applies a set of locating rules to determine there-from in which zone within the region each identified tag is located. According to Fig. 3 of this document the set of location rules provide for a mapping of reader input into a tag location by zone "Z10 to Z30", but ambiguity is provided in the result.

In US 2002/0139942 A1 a sensor array and a data acquisition system that is operatively coupled to the plurality of sensors is disclosed. The system is used to determine which sensors simultaneously detect an object or energy source, thereby determining the unique spatial region in which the object or energy source is located.

According to US 2001/0035815 A1 a system that allows determining the position of an object is disclosed. The position detection is based on the response of an object to a time-varying magnetic filed sensed by means of sensing coils. A control circuit receives signals from sensing coils representing an interrogation with the object and, based thereon, determines e.g. the position.

The known sensing systems were thus found to have the disadvantage that a multitude of sensors is necessary that may result in a prohibitive production cost. The sensors need to be connected to multiple detectors which further increases the production cost of the known systems. Finally, the high number of necessary scanning steps slows down the localization speed.

OBJECT AND SUMMARY OF THE INVENTION

It is an object of the invention to provide a sensing system of the type defined in the first and second paragraphs in which the disadvantages defined above are avoided. In order to achieve the object defined above, characteristic features are provided with a sensing system according to the invention such that a sensing system according to the invention can be characterized in the way defined below, that is:

A system according to claim 1.

The scanning position is defined as a point, a line, an area, or a 3-dimensional configuration where the physical property can be sensed. Measuring of the physical property is not limited to analog values but may also be resolved down to digital and even to binary values (e.g. the presence or absence of an object with a given property) or may be a change of state of said binary values (e.g. appearance or disappearance of an object). The term 'physical property' as used herein comprises, for example, pressure, electrical resistance, etc., but comprises also identity codes or the like. A plurality of scanning positions may be arranged in a straight or curved line, or in a 2-dimensional or 3-dimensional arrangement.

The invention provides the advantage that the number of sensors to be used to unambiguously sense and localize a given physical property in scanning positions is considerably reduced compared with known systems. The reduced number of sensors requires less wiring from the sensors to detectors, therefore reduces the production cost and renders it possible to design smaller systems. Finally, the localization speed is considerably accelerated since fewer localization steps have to be carried out to determine the location of the physical property in given scanning positions, which scanning positions are arranged in a line, a plane, or a space. Furthermore these measures provide the advantage that the result of the sensing operation is a position code that uniquely defines that scanning position where the physical property was sensed, or that scanning position where the physical property was not sensed (=negative sensing). Since the sensing regions are superposed on each of the scanning positions in a unique pattern and the sensing result of each sensing region is allocated to a different digit of the position code, the resulting position codes are inevitably unique for each scanning position. However, the following restrictions are to be noted: If all scanning positions are sensed for the same physical property, then the physical property is only allowed to appear in one of the scanning positions, or in all scanning positions but one. If the scanning positions are successively searched for different physical properties, for example different identity codes of RFID tags or different colors of a light beam, then the different physical properties may appear in different scanning positions.

It should be observed that the sensing system according to the invention is useful in determining either the location of a physical property in one of a plurality of scanning positions or in all scanning positions but one, or to successively determine the location of different physical properties in different scanning positions, provided each of the physical properties is uniquely identifiable by the sensors, e.g. by a unique range of values of the property, a unique identity number, or the like.

It should further be observed that the shape and aspect ratios of the scanning positions are not restricted but may be chosen according to the needs of the particular application of the present invention. Furthermore, the shapes and aspect ratios of the scanning positions may differ from one another.

In an embodiment of the present sensing system, the following condition is fulfilled:

$$\log_2(n) \leq i \leq 1 + \log_2(n)$$

with

i ...    number of sensing regions
n ...    number of scanning positions

These measures provide the advantage of a maximum utilization of the unique pattern of sensing regions, resulting in a very low or even no redundancy in respect of sensors and wiring lines between the sensors and detectors.

The physical property to be sensed comprises identity codes of RFID transponders of objects, and the sensors are configured as antennas for reading the identity codes of the RFID transponders. Such a sensing system is highly flexible at low production cost, since antennas for RFID transponders (tags) can be produced cheaply with arbitrary shapes and aspect ratios, so that varying shapes of scanning positions can be sensed within one sensing system according to the invention, offering the possibility to adapt the system to almost any conceivable needs without appreciable extra cost. For instance, the antennas may be formed by bending of wires or by applying electrically conductive pastes or inks onto a carrier.

It should be noted that the invention is not limited to identity codes of RFID tags. A physical property in the inventive sense may indeed be any data linked to an object, which data may be transmitted by various methods. An object with a barcode is mentioned as just one example of this. Here data associated with the object is read optically. An object comprising a unique arrangement of magnetic elements may also be mentioned, which unique arrangement identifies said object. Finally, an object comprising an active transmitter is mentioned, which transmitter broadcasts the object's identity code sequentially, for example by means of a infrared diode. In particular the last example shows that there is no clear borderline between localizing of objects and localizing of physical properties. Said infrared code may come from an object on a game board, i.e. the signal is generated in the vicinity of the sensor, or it may alternatively be generated "remotely", i.e. the position of the infrared code on the sensor array does not directly imply a position of a certain object.

Further embodiments of the inventive sensing system comprise sensors adapted to sense luminous intensity, luminous flux, quantity of light, wavelength or color, mass, force, pressure, flow rate, radioactivity, temperature, electric field strength, magnetic flux, electrical resistance, inductance, capacitance, current, or voltage, etc. The invention is thus applicable to a wide variety of physical properties that can be detected by sensors. In practice, the applicability is only limited by the cost and availability of the sensors.

The present sensing system may comprise a detector adapted to discriminate binary values from the sensing signals and to allocate the binary values to the respective digits of the position code, so that binary position codes are created. The detector applies a predefined criterion in discriminating whether the sensing results are to interpreted as "sensed" or "not-sensed", and enters the binary result into each of the digits of the position code. Examples of suitable criterions are a defined threshold being exceeded or a sensed identity code matching a predefined identity code.

If the detector of the present sensing system is adapted to allocate the sensing signals as discrete numbers to the respective digits of the position code, a wider variety of sensors can be used in embodiments of the invention, comprising not only digital sensors that deliver a binary TRUE/FALSE result of their sensing, but also analog sensors whose analog sensing signals are converted by the detector into discrete numbers which are entered into the respective digits of the position codes, so that the sensing result can be evaluated with high resolution.

To reduce the amount of wiring of the sensing system considerably, the sensing signals may be fed to a multiplexer whose output is fed to the detector. The sensors may thus very well be located away from the detector.

In a sensing system in accordance with the invention, a sensor with a sensing region is provided that sweeps the entirety of scanning positions. These measures provide the advantage that prior to carrying out an exact localization operation for predefined physical properties a very quick determination can be made whether the property is present in any scanning position at all. This can result in an accelerated processing speed.
The aspects defined above and further aspects of the invention are apparent from the exemplary embodiments to be described hereinafter and are explained with reference to these exemplary embodiments

BRIEF DESCRIPTION OF THE DRAWINGS

The invention will be described in more detail hereinafter with reference to exemplary embodiments. However, the invention is not limited to these exemplary embodiments.

Fig. 1A shows a game board with a known arrangement of antennas for localizing a token placed in one of a plurality of game board positions.
Fig. 1B is a flowchart illustrating a prior art scanning process for localizing the token on the game board of Fig. 1A.
Fig. 2A shows a game board with an arrangement of antennas according to the invention for localizing a token placed in one of a plurality of scanning positions on the board.
Fig. 2B shows the decision tree for localizing a token on the game board of Fig. 2A.
Fig. 3A and Fig. 3B show schematically in side view and plan view, respectively, a sensor B with two regions.
Fig. 4 shows a linear arrangement of scanning positions to be scanned by sensing regions arranged according to the invention.
Fig. 5 shows a linear arrangement of scanning positions to be scanned by sensing regions arranged not according to the invention.
Fig. 6 shows yet another linear arrangement of scanning positions to be scanned by sensing regions arranged not according to the invention.
Fig. 7 shows scanning positions in an arrangement of a 3 x 2 matrix to be scanned by sensing regions arranged not according to the invention.
Fig. 8 shows another linear arrangement of scanning positions to be scanned by sensing regions arranged according to the invention.
Fig. 9 shows a spatial arrangement of scanning positions to be scanned by sensing regions arranged according to the invention.

DESCRIPTION OF EMBODIMENTS

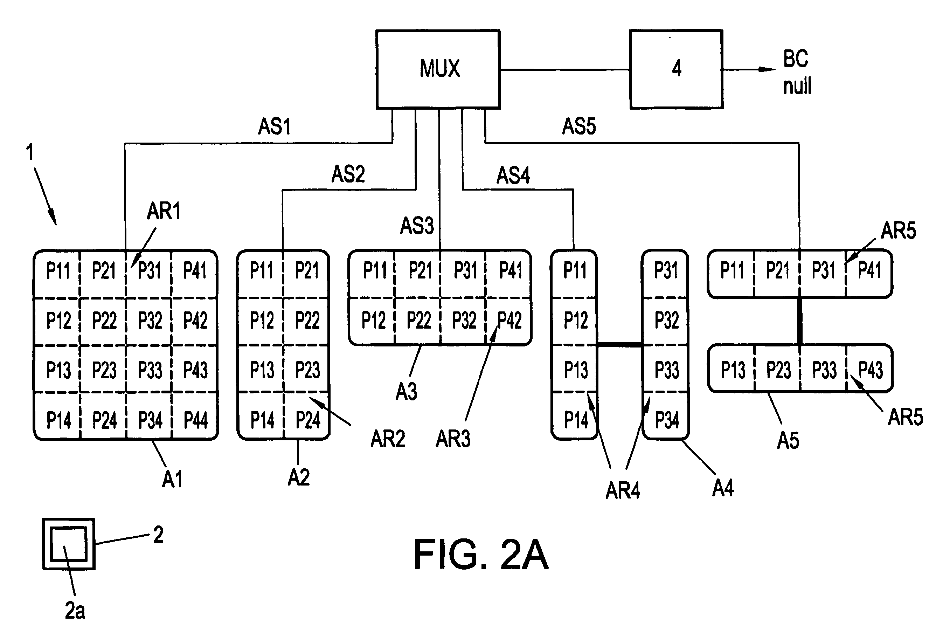

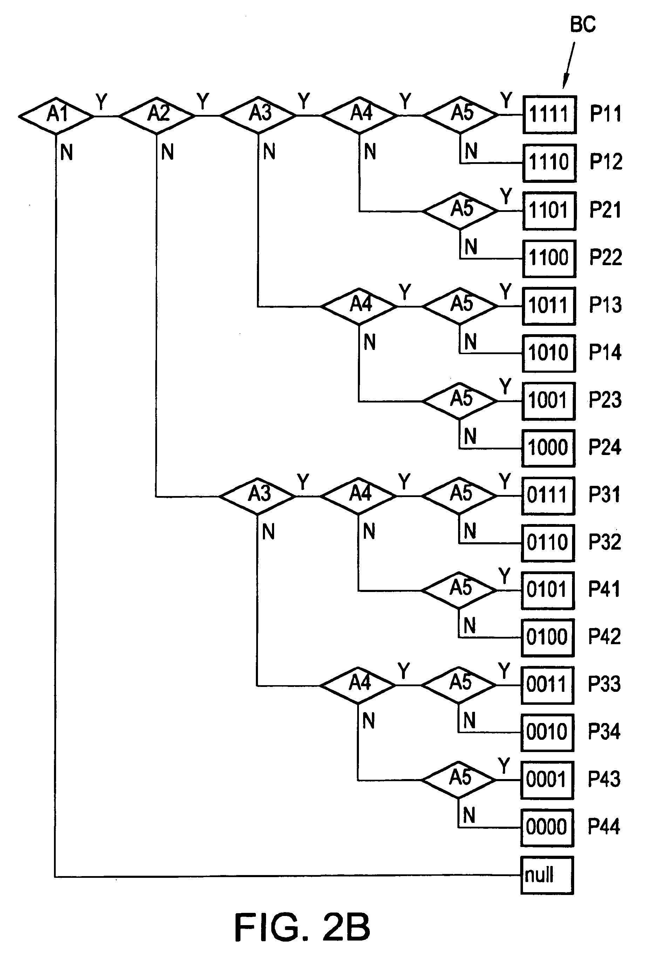

Fig. 2A shows a game board 1 that is divided into sixteen scanning positions P11 - P44 (generally P*column-row*) on which an object 2 with specific properties can be placed. The scanning positions P11 - P44 are arranged in a matrix with four rows and four columns. The board 1 includes a sensing system according to the invention sensing for a predefined physical property. In the present embodiment, the sensing system is adapted as a system for localizing the object 2 that has the predefined physical property within one of the scanning positions P11 - P44. For example, the object 2 may be configured as a token with a built-in RFID tag 2a. Each scanning position is identified by a unique binary position code BC (see Fig. 2B), as will be explained below. The system for localizing the object 2 comprises a plurality of sensors A1 - A5, which in this embodiment are configured as antennas for reading the RFID tag 2a. Strictly speaking the sensors A 1 - A5 are configured as loop antennas having sensing regions AR1 - AR5 for sensing a property of the object 2, which property in this embodiment is an identity code to be read out from the RFID tag 2a. It should be noted that identity codes stored in RFID tags are usually unique, so it is practicable to put more than one token on the board 1, each having an RFID tag with a unique identity code, and to localize all of them by repeating the localization process for each token. It should further be noted that, although in this embodiment of the invention the shape of the antenna loops of sensors A1 - A5 coincide with the sensing regions AR1 - AR5, this is not a necessary feature.

According to the invention, the sensing regions AR1 - AR5 are arranged such that each sensing region AR1 - AR5 sweeps at least one scanning position P11 - P44. In this embodiment the sensing region AR1, which is a special sensing region as will be explained below, sweeps the entire board 1, i.e. all scanning positions P11 - P44. Sensing region AR2 of sensor A2 sweeps the scanning positions P11, P12, P13, P14, P21, P22, P23, P24. Sensing region AR3 of sensor A3 sweeps the scanning positions P11, P12, P21, P22, P31, P32, P41, P42. Sensing region AR4 of sensor A4 sweeps the scanning positions P11, P12, P13, P14, P31, P32, P33, P34. Sensing region AR5 of sensor A5 sweeps the scanning positions P11, P13, P21, P23, P31, P33, P41, P43. Furthermore, the sensing regions AR1 - AR5 overlap one another at least at some of the scanning positions P11 - P44, such that each of the scanning positions P11 - P44 is swept by one or a combination of sensing region(s) AR1 - AR5 that differs from the sensing regions AR1 - AR5 or their combinations for all other scanning positions P11 - P44, so that all scanning positions P11- P44 are swept by a unique pattern of sensing regions AR1 - AR5, the following condition being fulfilled:

$$\log_2(n) \leq i < x \cdot n^{1/x}$$

wherein i is the number of sensor regions, which is five, n is the number of scanning positions, which is sixteen, and x is the number of spatial dimensions in which the arrangement of scanning positions extend, which is two, so that:

$$\log_2(16) \leq 5 < 2 \cdot 16^{1/2}$$

and hence:

$$4 \leq 5 < 8.$$

When configured as antennas, the sensors A 1 - A5 are successively activated so that they radiate an electromagnetic field which is modulated by the RFID tag 2a according to its identity code when present within the sensing region AR1 - AR5 of one or more of the sensors A1 - A5. Each sensor A 1 - A5 outputs a sensing signal AS1 - AS5 that contains information denoting modulation or no modulation of the electromagnetic field by the RFID tag 2a, so that it can be derived from these sensor signals AS1- AS5 whether or not the object 2 with the RFID tag 2a is present within the sensing region AR1 - AR5 of the corresponding sensor A1 - A5. In this embodiment the sensor signals AS1 - AS5 may also contain information from which the specific identity code of the RFID tag 2a can be derived.

The sensor signals AS1 - AS5 are fed to a multiplexer MUX which is connected to a detector 4. The detector 4 controls the successive activation of the sensors A1 - A5 and analyzes the information contained in the sensor signals AS1 - AS5 in order to localize the scanning position P11 - P44 where an object 2 is present, provided it is actually positioned on the board 1. In the present embodiment of the invention, the detector 4 discriminates the sensor signals AS1 - AS5 to binary values indicating whether or not the property of the object 2 was detected in the respective sensing region AR1 - AR5. For this discrimination, the detector 4 applies the criterions whether an identity code of the RFID tag 2a could be sensed, and if so, whether it corresponds to a predefined identity code. The detector 4 outputs the result of its localizing operation as a binary position code BC, wherein each digit is allocated to a different sensing region AR1 - AR5, so that the position code BC uniquely identifies the one scanning position P 11 - P44 where the object 2 is placed, or outputs a null signal if no object can be found on the board 1 (as is depicted in Fig. 2A).

The operation mode of the detector 4 will now be explained in detail with reference to the decision tree depicted in Fig. 2B. First of all, detector 4 activates sensor A 1 whose sensing region AR1 sweeps the entire board 1, i.e. the entire area to be scanned for objects 2. If the sensing signal AS1 output by sensor A1 indicates that there is no object 2 on the board 1, detector 4 immediately terminates the localization process and outputs a null signal indicative of an absence of objects 2. After a waiting period dependent on the required responsiveness, the sensor A 1 is again queried. However, if the sensing signal AS1 indicates that there is an object 2 somewhere on the board 1, the real localization process is started. For this purpose, the detector 4 allocates each of the sensor signals AS2 - AS5 (transformed into binary values) to one digit of a binary position code BC, successively activates the sensors A2 - A5, and queries the output sensing signals AS2 - AS5. For each sensing signal AS2 - AS5 which indicates that the object 2 is present within the sensing region AR2 - AR5 of the respective sensor A2 - A5, the allocated digit of the binary position code BC is set to 1. On the other hand, for each sensing signal AS2 - AS5 which indicates that the object 2 is not present within the sensing region AR2 - AR5 of the respective sensor A2 - A5, the allocated digit of the binary position code BC is set to 0. Fig. 2B is a Table containing all values of the binary position code BC together with the corresponding scanning positions P 11 - P44. It will be appreciated that the localization process has been reduced to five localization steps, which is a considerable acceleration compared with the prior art arrangement of sensors in columns and rows, where eight localization steps are needed for scanning an area with sixteen scanning positions arranged in a 4 x 4 matrix.

It should be observed that, although a special sensor A1 is provided for quick detection whether an object 2 is present somewhere on the board 1 in this embodiment, this sensor A1 may be omitted in many cases. If it is acceptable that scanning position P44 is excluded from localizing, for example, detector 4 may be configured so as to carry out the localization process with sensors A2 - A5 as described above, but to conclude that no object 2 is present on the board 1 if none of the sensor signals AS2 - AS5 indicates the presence of such an object 2. In this case it will output a null signal instead of a binary position code BC. Of course, a binary position code BC with the value 0000 may be provided instead of a null signal. On the other hand, if it guaranteed that there is always an object 2 on the board 1, there is no need for the sensor A1 either.

It should further be observed that the sensing system according to the invention may be adapted to a negative logic system wherein the sensors A1 - A5 are designed to output sensing signals AS1 - AS5 only if the property of the object 2 to be sensed could not be sensed within the sensing regions AR1 - AR5.

It should also be observed that in some applications of the invention it may not be necessary to detect the exact scanning position, but it may suffice to detect e.g. the quadrant of the board 1 in which the object 2 is positioned. For such applications the sensing system may decide to stop at any time when the required accuracy has been reached.

The arrangement of the sensing regions AR1 - AR5 is such that also the following inequality is met, which is a measure for minimum redundancies of the sensing regions:

$$\log_2(n) \le i \le 1 + \log_2(n)'$$

wherein $\log_2$ is the abbreviation for logarithm to the base of 2, i is the number of sensing regions, which is 5, and n is the number of scanning positions, which is sixteen, hence:

$$4 \le 5 \le 1 + 4.$$

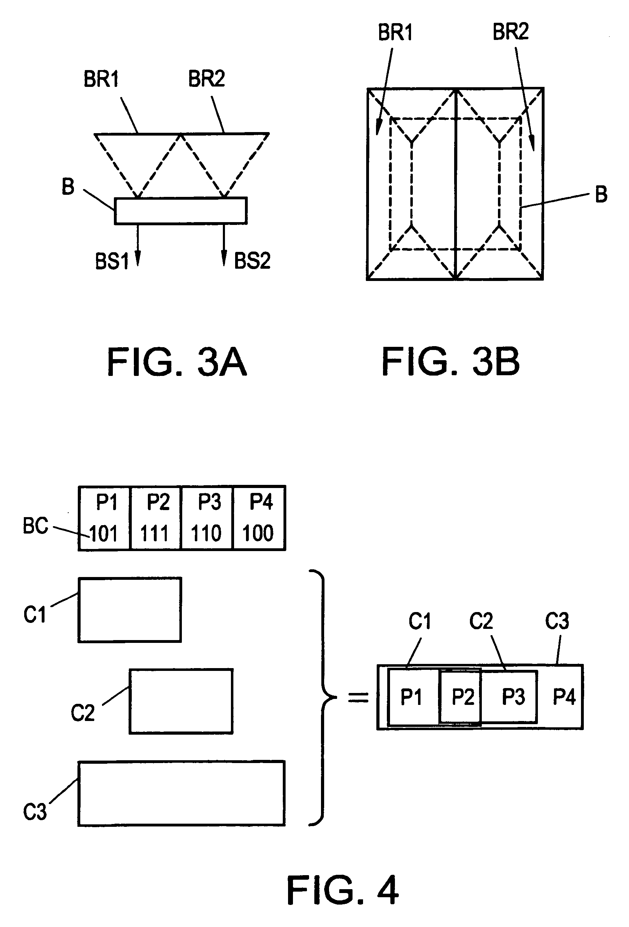

Fig. 3A and Fig. 3B show schematically in side view and plan view, respectively, that a sensor B can provide more than one sensing region, here two sensing regions BR1, BR2, and that the shape and aspect ratio of the sensing regions BR1, BR2 need not coincide with the sensor B. A sensing signal BS1, BS2 is generated for each sensing region BR1, BR2. An example of such a sensor B is a photosensor with two photosensitive elements. It is furthermore conceivable that the visual angles of said elements are different. Hence an inventive sensing system could be built with identical optical sensing elements having different lenses, thus providing a pattern of different sensing regions BR1, BR2.

Further arrangements of scanning positions and arrangements and shapes of sensing regions according to embodiments of the present invention will now be discussed.

Fig. 4 shows a linear arrangement of scanning positions P1 - P4. According to the invention, three sensing regions C1, C2, C3 are provided for scanning the scanning positions P1 - P4 for certain physical properties. Sensing region C1 sweeps scanning positions P1, P2. Sensing region C2 sweeps scanning positions P2, P3. Sensing region C3 sweeps all four scanning positions P1 - P4. The outputs of sensing regions C1, C2, C3 are allocated to different digits of a binary position code BC, sensing region C 1 being allocated to the first (lowest) digit, sensing region C2 to the second digit, and sensing region C3 to the third (highest) digit. The pattern of sensing regions C1 - C3, and hence the resulting binary position code BC, is unique for each scanning position P1 - P4 thanks to the inventive arrangement of sensing regions C1 - C3.

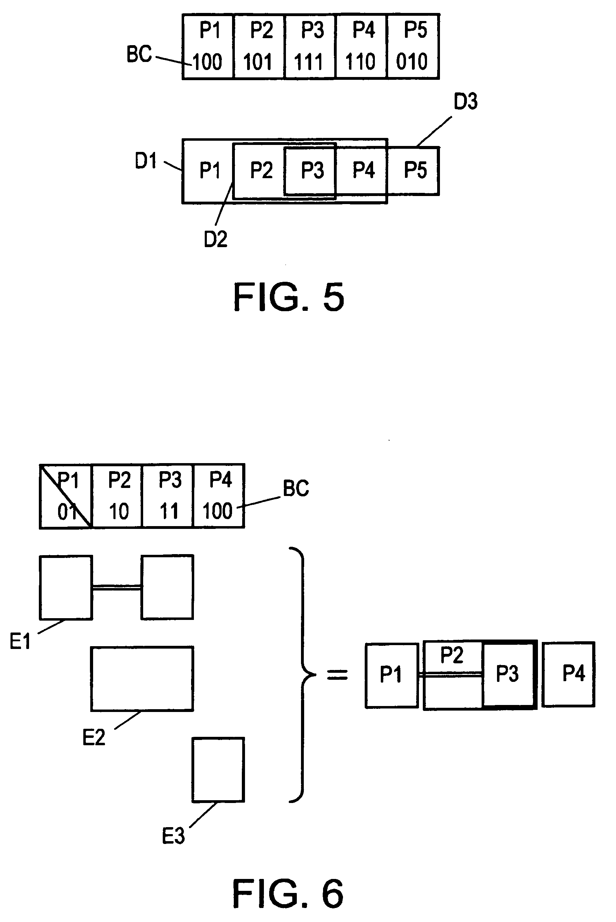

Fig. 5 shows a linear arrangement of scanning positions P1 - P5. Not according to the invention, three sensing regions D1, D2, D3 are provided for scanning the scanning positions P1 - P5 for certain physical properties. Sensing region D1 sweeps scanning positions P1 - P4. Sensing region D2 sweeps scanning positions P2, P3. Sensing region D3 sweeps scanning positions P3 - P5. The outputs of sensing regions D1, D2, D3 are allocated to different digits of a binary position code BC, sensing region D2 being allocated to the first digit, sensing region D3 to the second digit, and sensing region D1 to the third digit. The pattern of sensing regions D1 - D3, and hence the resulting binary position code BC, is unique for each scanning position P1 - P4 thanks to the inventive arrangement of sensing regions D1 - D3.

Fig. 6 shows yet another linear arrangement of scanning positions P1 - P4. Not according to the invention, three sensing regions E1, E2, E3 are provided for scanning the scanning positions P1 - P4 for certain physical properties. Sensing region E 1 sweeps scanning positions P1 and P3 (it should be pointed out that they are not adjacent to each other). Sensing region E2 sweeps scanning positions P2, P3. Sensing region E3 only sweeps scanning position P4. The outputs of sensing regions E1, E2, E3 are allocated to different digits of a binary position code BC, sensing region E1 being allocated to the first digit, sensing region E2 to the second digit, and sensing region E3 to the third digit

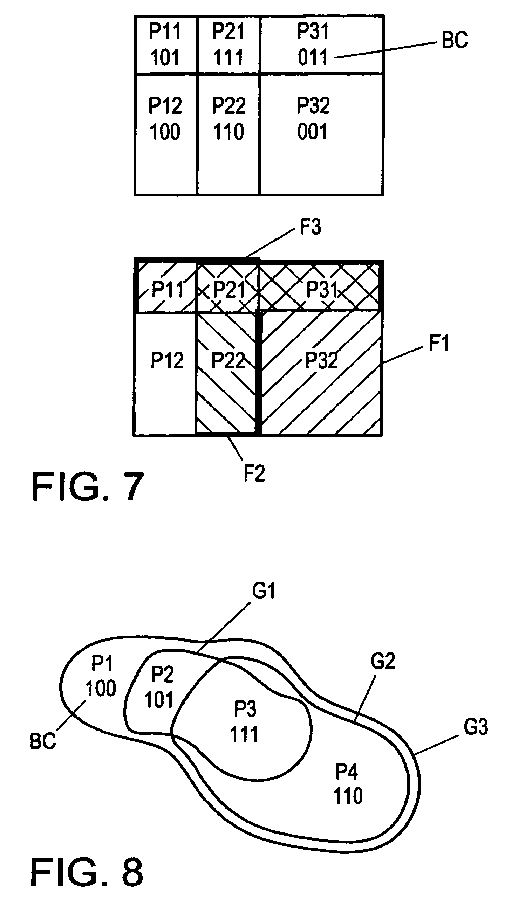

Fig. 7 shows an arrangement of scanning positions P11 - P32 in a 3 x 2 matrix. Not according to the invention, three sensing regions F1, F2, F3 are provided for scanning the scanning positions P11 - P32 for certain physical properties. Sensing region F1 sweeps scanning positions P11, P12, P21, P22. Sensing region F2 sweeps scanning positions P21, P22, P31. Sensing region F3 sweeps scanning positions P11, P21, P31, P32. Particularly notable are the L-shaped configuration of sensing regions F2, F3 and the varying sizes of scanning positions P11 - P32. The outputs of sensing regions F1, F2, F3 are allocated to different digits of a binary position code BC, sensing region F1 being allocated to the first digit, sensing region F2 to the second digit, and sensing region F3 to the third digit.

Fig. 8 shows another linear arrangement of scanning positions P1 - P4. According to the invention, three sensing regions G1, G2, G3 are provided for scanning the scanning positions P1 - P4 for certain physical properties. This embodiment of the invention demonstrates that the shapes of the scanning positions P1 - P4 and the sensing regions G1 - G3 are not limited to right-angled configurations, but may be chosen arbitrarily. Sensing region G 1 sweeps scanning positions P2, P3. Sensing region G2 sweeps scanning positions P3, P4.

Sensing region G3 sweeps all scanning positions P1 - P4. The outputs of sensing regions G1, G2, G3 are allocated to different digits of a binary position code BC. Here sensing region G 1 is allocated to the first digit, sensing region G2 to the second digit, and sensing region G3 to the third digit Again, the pattern of sensing regions G1 - G3, and hence the resulting binary position code BC, is unique for each scanning position P1 - P4 thanks to the inventive arrangement of sensing regions G1 - G3.

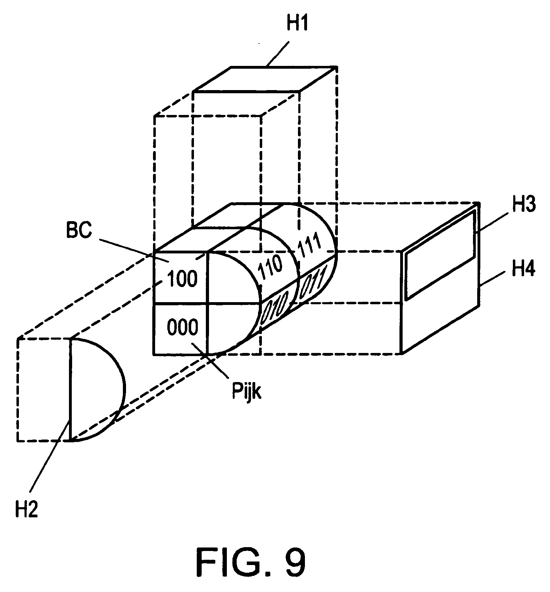

Finally, Fig. 9 shows a spatial arrangement of eight scanning positions, generally designated Pijk. According to the invention, four sensing regions H1, H2, H3, H4 are provided for scanning the eight scanning positions Pijk from different dimensional directions. The outputs of sensing regions H1 - H4 are allocated to different digits of a binary position code BC, sensing region H 1 to the first digit, sensing region H2 to the second digit, and sensing region H3 to the third digit. It should be observed that the sensing region H2 has a semicylindrical shape. Sensing region H4 is allocated to a fourth digit which is not shown in the Figure. The signal originating from sensing region H4 may also be interpreted as an enable signal. It is conceivable for sensing region H4 to be accessed periodically. Only if there is any signal, the further location determination process is started. The arrangement of Fig. 9 again is such that the condition:

$$\log_2(n) \leq i < x \cdot n^{1/x}$$

$$\log_2(8) \leq 4 < 3 \cdot 8^{1/3}$$

$$3 \leq 4 < 6$$

as well as the condition:

$$\log_2(n) \leq i \leq 1 + \log_2(n)$$

$$\log_2(8) \leq 4 \leq 1 + \log_2(8)$$

$$3 \leq 4 \leq 4$$

is fulfilled.

Finally it should be noted that the above-mentioned embodiments illustrate rather than limit the invention, and that those skilled in the art will be capable of designing many alternative embodiments without departing from the scope of the invention as defined by the appended claims. In particular it is noted that, although only a sample of physical properties was mentioned explicitly to illustrate the invention, the scope of the invention is not limited to these physical properties. Those skilled in the art may easily apply the principles of the present invention to other physical properties. In the claims, any reference signs placed in parentheses shall not be construed as limiting the claims. The word "comprising" and "comprises", and the like, does not exclude the presence of elements other than those listed in any claim or the specification as a whole. The singular reference of an element does not exclude the plural reference of such elements and vice-versa. In a device claim enumerating several means, several of these means may be embodied by one and the same item of hardware or software. The mere fact that certain measures are recited in mutually different dependent claims does not indicate that a combination of these measures cannot be used to advantage.

**Claims**

1. A system for sensing a physical property allocated to scanning positions (P1-P5, P11-P44, Pijk), comprising sensors (A1-A5, B) adapted to sense the physical property within sensing regions (AR1-AR5, BR1-BR2, C1-C3, G1-G3, H1-H4), wherein the sensing regions (AR1-AR5, BR1-BR2, C1-C3, G1-G3, H1-H4) are arranged such that each of said regions sweeps at least one scanning position (P1-P5, P11-P44, Pijk) and sensing regions (AR1-AR5, BR1-BR2, C1-C3, G1-G3, H1-H4) being superposed on one another at least in one scanning position (P1-P5, P11-P44, Pijk) such that each scanning position is swept by a unique pattern of sensing regions (AR1-AR5, BR1-BR2, C1-C3, G1-G3, H1-H4), wherein the sensing results of the sensing regions (AR1-AR5, BR1-BR2, C1-C3, G1-G3, H1-H4) are transmitted via sensing signals (AS1-AS5, BS1, BS2), wherein the sensing signals (AS1-AS5, BS1-BS2) are fed to a detector (4) being adapted to allocate each sensing signal (AS1-AS5, BS1, BS2) to different digits of a position code (BC), **characterized in that** a sensor (A1) with a sensing region (AR1) is provided that is adapted to sweep the entirety of scanning positions (P11 - P44).

2. The sensing system as claimed in claim 1, wherein the physical property comprises identity codes of RFID transponders (2a) of objects (2), and the sensors (A1-A5) are configured as antennas designed for reading the identity codes of the RFID transponders (2a).

3. The sensing system as claimed in claim 1, wherein the physical properties comprise luminous intensity, luminous flux, quantity of light, wavelength or color, mass, force, pressure, flow rate, radioactivity, temperature, electric field strength, magnetic flux, electric resistance, inductance, capacity, current, or voltage, and the sensors (A1-A5, B) are configured to sense said physical properties.

4. The sensing system as claimed in claim 1, wherein the detector (4) is adapted to discriminate binary values from the sensing signals (AS1-AS5, BS1, BS2) and to allocate the binary values to the respective digits of the position code (BC).

5. The sensing system as claimed in claim 1, wherein the detector (4) is adapted to allocate the sensing signals (AS1-AS5, BS 1-BS2) as discrete numbers to the respective digits of the position code (BC).

6. The sensing system as claimed in claim 1, wherein the sensing signals (AS1-AS5, BS1-BS2) are fed to a multiplexer (MUX) and the output of the multiplexer (MUX) is fed to the detector (4).

## Patentansprüche

1. Ein System zum Erkennen einer physikalischen Eigenschaft, die Rasterstellungen (P1 - P5, P11 - P44, Pijk) zugewiesen ist, welches Sensoren (A1 - A5, B) aufweist, die eingerichtet sind, um die physikalische Eigenschaft in Erkennungsregionen (AR1 - AR5, BR1 - BR2, C1 -C3, G1 - G3, H1 - H4) zu erkennen, wobei die Erkennungsregionen (AR1 - AR5, BR1 - BR2, C1 - C3, G1 - G3, H1 - H4) so angeordnet sind, dass jede der Regionen zumindest eine Rasterstellung (P1 - P5, P11 - P44, Pijk) abtastet und die Erkennungsregionen (AR1 - AR5, BR1 - BR2, G1 - G3, H1 - H4) in zumindest einer Rasterstellung einander überlagert sind, so dass jede Rasterstellung mittels eines einzigartigen Musters der Erkennungsregionen (AR1 - AR5, BR1 - BR2, C1 - C3, G1 - G3, H1 - H4) abgetastet wird, wobei die Erkennungsergebnisse der Erkennungsregionen (AR1 - AR5, BR1 - BR2, C1 - C3, G1 - G3, H1 - H4) über Erkennungssignale (AS1 - AS5, BS1, BS2) gesendet wird, wobei die Erkennungssignale (AS1 - AS5, BS1, BS2) an einen Detektor (4) zugeführt werden, der eingerichtet ist, um jedes Erkennungssignal (AS1 - AS5, BS1, BS2) verschiedenen Stellen eines Positionscodes (BC) zu zuweisen, **dadurch gekennzeichnet, dass** ein Sensor (A1) mit einer Erkennungsregion (AR1) bereitgestellt wird, der eingerichtet ist, um die Gesamtheit der Rasterstellungen (P11 - P44) abzutasten.

2. Das Erkennungssystem gemäß Anspruch 1, wobei die physikalische Eigenschaft Identitätscodes von RFID Transpondern (2a) von Objekten (2) aufweist, und die Sensoren (A1 - A5) als Antennen konfiguriert sind, die zum Lesen der Identitätscodes der RFID Transponder (2a) vorgesehen sind.

3. Das Erkennungssystem gemäß Anspruch 1, wobei die physikalischen Eigenschaften eine Lichtintensität, einen Lichtstrom, eine Größe von Licht, eine Wellenlänge oder Farbe, eine Masse, eine Kraft, ein Druck, eine Flussrate, eine Radioaktivität, eine Temperatur, eine elektrische Feldstärke, einen magnetischer Fluss, einen elektrischen Widerstand, eine Induktivität, eine Kapazität, einen Strom oder eine Spannung aufweist und die Sensoren (A1 - A5, B) konfiguriert sind, um diese physikalischen Eigenschaften zu erkennen.

4. Das Erkennungssystem gemäß Anspruch 1, wobei der Detektor (4) eingerichtet ist, um binäre Werte von den Erkennungssignalen (AS1 - AS5, BS1, BS2) zu diskriminieren und um die binären Werte den entsprechenden Stellen des Positionscodes (BC) zu zuweisen.

5. Das Erkennungssystem gemäß Anspruch 1, wobei der Detektor (4) eingerichtet ist, um die Erkennungssignale (AS1 - AS5, BS1 - BS2) als diskrete Zahlen den entsprechenden Stellen des Positionscodes (BC) zu zuweisen.

6. Das Erkennungssystem gemäß Anspruch 1, wobei die Erkennungssignale (AS1 - AS5, BS1 - BS2) einem Multiplexer (MUX) zugeführt werden und der Ausgang des Multiplexers (MUX) dem Detektor (4) zugeführt wird.

## Revendications

1. Système de détection d'une propriété physique affectée à des positions de balayage (P1-P5, P11-P44, Pijk) comprenant des capteurs (A1-A5, B), agencé de manière à détecter la propriété physique dans des régions de détection (AR1-AR5, BR1-BR2, C1-C3, G1-G3, H1-H4), dans lequel les régions de détection (AR1-AR5, BR1-BR2, C1-C3, G1-G3, H1-H4) sont disposées de telle sorte que chacune desdites régions balaye au moins une position de balayage (P1-P5, P11-P44, Pijk) et des régions de détection (AR1-AR5, BR1-BR2, C1-C3, G1-G3, H1-H4) étant superposées l'une sur l'autre au moins dans une position de balayage (P1-P5, P11 - P44, Pijk), de sorte que chaque position de balayage soit balayée par une configuration unique de régions de détection (AR1-AR5, BR1-BR2, C1-C3, G1-G3, H1-H4), dans lequel les résultats de détection des régions de détection (AR1-AR5, BR1-BR2, C1-C3, G1-G3, H1-H4) sont transmis par l'intermédiaire de signaux de détection (AS1-AS5, BS1, BS2), dans lequel les signaux de détection (AS1-AS5, BS1, BS2) sont envoyés à un détecteur (4) agencé de manière à affecter chacun des signaux de détection (AS1-AS5, BS1, BS2) à différents chiffres d'un code de position (BC), **caractérisé en ce qu'**un capteur (A1) avec une région de détection (AR1) est prévu pour être adapté pour balayer la totalité des positions de balayage (P11-P44).

2. Système de détection selon la revendication 1, dans lequel la propriété physique comprend des codes d'identité de transpondeurs RFID (2a) d'objets (2), et dans lequel les capteurs (A1-A5) sont configurés sous la forme d'antenne conçues pour lire les codes d'identité des transpondeurs RFID (2a).

3. Système de détection selon la revendication 1, dans lequel les propriétés physiques comprennent l'intensité lumineuse, le flux lumineux, la quantité de lumière, la longueur d'onde ou la couleur, la masse, la force, la pression, le débit, la radioactivité, la température, l'intensité du champ électrique, le flux magnétique, la résistance électrique, l'inductance, la capacité, le courant ou la tension, et dans lequel les capteurs (A1-A5, B) sont configurés de manière à détecter lesdites propriétés physiques.

4. Système de détection selon la revendication 1, dans lequel le détecteur (4) est agencé de manière à discriminer des valeurs binaires partir des signaux de détection (AS1-AS5, BS1, BS2) et à affecter les valeurs binaires aux chiffres respectifs du code de position (BC).

5. Système de détection selon la revendication 1, dans lequel le détecteur (4) est agencé de manière à affecter les signaux de détection (AS1-AS5, BS1-BS2) en tant que nombres discrets aux chiffres respectifs du code de position (BC).

6. Système de détection selon la revendication 1, dans lequel les signaux de détection (AS1-AS5, BS1-BS2) sont envoyés à un multiplexeur (MUX) et dans lequel la sortie du multiplexeur est envoyée au détecteur (4).

FIG. 1A (PRIOR ART)

FIG. 1B (PRIOR ART)

FIG. 2A

FIG. 2B

FIG. 3A

FIG. 3B

FIG. 4

FIG. 5

FIG. 6

| P11 101 | P21 111 | P31 011 |
|---------|---------|---------|
| P12 100 | P22 110 | P32 001 |

BC

F3

P11 P21 P31

P12 P22 P32

F1

F2

**FIG. 7**

G1

P1 100

P2 101

P3 111

G2

BC

P4 110

G3

**FIG. 8**

H1

BC

100

000

110

111

010 | 011

Pijk

H3

H4

H2

# FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6040774 A
- US 20020139942 A1

- US 20010035815 A1